# EUROPEAN PATENT APPLICATION

(11) **EP 0 843 969 A1**
(43) Date of publication of application: **27.05.1998**
(21) Application number: 97203546.3
(22) Date of filing: 14.11.1997
(51) Int. Cl.: A22B 5/04

(54) **Device and method for collecting blood when slaughtering animals**

(30) Priority: 15.11.1996 NL 1004542
(71) Applicant: Harimex B.V., NL-7371 GD Loenen (NL)
(72) Inventor: Wolthuis, Anko Arnoldus, 7423 EG Deventer (NL); De Wilde, Cornelis, 7381 CB Klarenbeek (NL)
(74) Representative: Zonneveld, Hendrik Jan

(57) **Abstract**

the invention relates to a device and a method for slaughtering animals, in particular pigs, in which a number of animals suspended by their hind legs from a conveyor system are conveyed in succession to a sticking place, at which sticking place blood is collected according to the open system in a blood collection vessel (6). According to the invention, such guide means, such as a special screen (8) on the collection vessel, a guide rod (37) and a fixing conveyor (39), are fitted for various parts of the animal's body that contamination of the collected blood is prevented. By use of the invention, the quality of the collected blood is improved, and considerably more blood per animal can be collected.

## Description

The invention relates to a device for collecting blood when slaughtering animals, in particular pigs, according to the open system by means of a collection vessel for blood, in which the blood can be collected during sticking of the animal. The invention also comprises a method for collecting blood when slaughtering animals.

A device and method of the type mentioned in the preamble are known from the article "Designing equipment in the meat sector" by W.N.A. Burggraaf and J. Kastelein (see page 53 to end of page 55 of VLEESwetenschap, trade journal for the meat sector, No. 2 of April 1996).

In the Netherlands alone, tens of millions of litres of blood are collected during the slaughter of pigs each year, and this blood is processed into various high-grade products, such as in the human food and animal feed sector and in pharmaceuticals. This means that at the present time in particular increasingly high standards are being set for quality, i.e. the purity of the collected blood. Surprisingly, it has now been found that a particularly high quality of collected blood can be obtained in a simple manner if the device of the type described in the preamble according to the invention is characterized in that guide means are fitted, in particular for parts of the animal's body, for the purpose of preventing the blood from becoming contaminated. It has also been found that more blood per animal can be collected through use of the guide means according to the invention, in other words, less blood per animal is lost. In the case of pigs it has been found that by using the device according to the invention at least around 10 - 15% more blood per pig can be collected.

In the case of pigs, which on average contain in total approximately 4.2 litres of blood, an increase of 10 - 15% of the collectable part means an enormous increase in blood production. The device according to the invention is advantageously provided with a conveyor system with fixing elements, from which a number of animals can be suspended one after the other by their hind legs and conveyed to a sticking place with blood collection vessel, which has a bottom provided with an outlet and upright side walls, characterized in that the guide means are fitted on the blood collection vessel and are formed by a screen extending above the blood collection vessel, on which screen the front legs of an animal to be stuck can rest, and with a free passage opening being present between the front edge at the animal side of the screen and the front wall of the blood collection vessel, for allowing through blood flowing out of the animal into the vessel, and in that at its top side the screen has a backward sloping, in particular curved profile, while the screen has a curled front edge. Advantageous results are achievable if according to the invention the width of said passage opening, measured in a plane at right angles to the edges of the blood collection vessel, is 10 to 50 cm, preferably approximately 15 cm. The length of the passage opening, measured in the direction of conveyance, according to the invention is 100 to 200 cm and will generally be equal to the length of the blood collection vessel. A simple embodiment according to the invention is characterized in that a guide element, such as a guide rod, extending approximately at leg thickness above the screen in the lengthwise direction of the blood collection vessel is fitted for supporting the rear side of the front legs, for example somewhere near the ankles.

A further improved embodiment of the device according to the invention is characterized in that at the position of the blood collection vessel, guide means in the form of dividing elements, in particular dividing walls, are fitted at some distance from each other on either side of animals to be slaughtered, the dividing walls being fitted at right angles to a fixing conveyor belt which is movable along with the animals to be slaughtered, on which the animals can rest on their back, and by means of which the animals are prevented from turning. The design according to the invention is advantageously such that half the length of the fixing conveyor belt extends approximately over the full length of the blood collection vessel, the fixing conveyor belt together with the dividing walls forming a number - for example 2 to 10 - of adjacent supporting points for animals to be slaughtered.

The device according to the invention is also characterized in that the fixing conveyor belt with dividing elements is fitted in such a way that it is adjustable relative to the blood collection vessel. The fixing conveyor belt with dividing walls according to the invention can be suspended in a hinged manner and can be adjustable by means of one or more, for example pneumatically operating, adjusting cylinders. This ensures in a simple and effective way according to the invention that the quality of the blood flowing out of the animal is not adversely affected by contaminants normally still present on the legs of the slaughtered animal. By use of the device and the method according to the invention, the high quality of the collected blood can even be maintained during the slaughter of pigs at high speeds of, for example, 360 to 800 animals per hour.

A preferred embodiment according to the invention is characterized in that the bottom of the blood collection vessel slopes towards the outlet opening situated in the lowest point of the vessel, which outlet opening is connected to a blood pump, which can convey the blood to an intermediate tank connected thereto, which intermediate tank according to the invention can be connected as desired to a main tank for the blood of approved animals or to a destruction tank for the blood of rejected animals.

The quality and the purity of the collected blood is increased even further if the device according to the invention is characterized in that the blood collection vessel is connected to a supply for cleaning fluid, which can flush out and disinfect the collection vessel during interruptions in the production process, in which case the cleaning fluid can be supplied by way of the blood discharge pump to a waste tank.

The device according to the invention is also advantageously characterized in that the blood collection vessel is connected to a discharge valve fitted in the outlet upstream of the main blood pump, for discharging visible contamination if desired.

The discharge valve according to the invention in this case is preferably designed to be adjustable in such a way that the collection vessel can be flowed through by the blood of one or more successive pigs. A less advantageous embodiment of the device according to the invention is characterized in that the inside of the blood collection vessel has a smooth, in particular electrolytic, polished surface. Moreover, the inside of the blood collection vessel according to the invention can be provided with a smooth cladding layer, in particular on the basis of polytetrafluoroethylene (Teflon).

The invention also comprises a method for slaughtering animals, in particular pigs, in which a number of animals suspended from the conveyor system by their hind legs are supplied in succession to a sticking place, and at the sticking place according to the open system the blood is collected in a blood collection vessel, which method is characterized in that such guide means for parts of the animal's body are used that contamination of the collected blood and/or blood being lost is prevented.

According to the invention, guide means which are fitted on the blood collection vessel in the form of a screen extending above the blood collection vessel are advantageously used here, on which screen the front legs of an animal rest during the sticking operation, and in the case of which the blood flowing out of the animal flows into the collection vessel by way of a free passage opening between the front edge of the screen and the front wall of the collection vessel.

A simple embodiment of the method according to the invention is characterized in that a guide element, such as a guide rod, extending approximately at a leg's width above the screen in the lengthwise direction of the collection vessel is used for supporting the rear side of the front legs of the animal.

A further improvement of the method according to the invention is characterized in that at the position of the blood collection vessel, guide means in the form of dividing walls placed at some distance from each other on either side of an animal to be slaughtered are used, the dividing walls being fitted at right angles to a conveyor belt moving along with the animals to be slaughtered and on which the animals rest with their back.

The invention will be explained in greater detail with reference to the diagrammatic drawing.

Fig. 1 shows the blood collection vessel without cover, viewed according to the arrows I-I in Fig. 2, with a pig suspended above it.

Fig. 2 shows the collection vessel without cover, viewed according to the arrows II-II in Fig. 1.

Fig. 3 shows the cover of the blood collection vessel, viewed according to arrows III-III in Fig. 4.

Fig. 4 shows the cover of the blood collection vessel, viewed according to the arrows IV-IV in Fig. 3.

Fig. 5 shows a view of the device according to the invention, with the fixing conveyor, viewed according to the arrows V-V in Fig. 6.

Fig. 6 shows a view of the device with fixing conveyor, viewed according to the arrows VI-VI in Fig. 5.

Fig. 7 again shows the fixing conveyor with six pigs thereon.

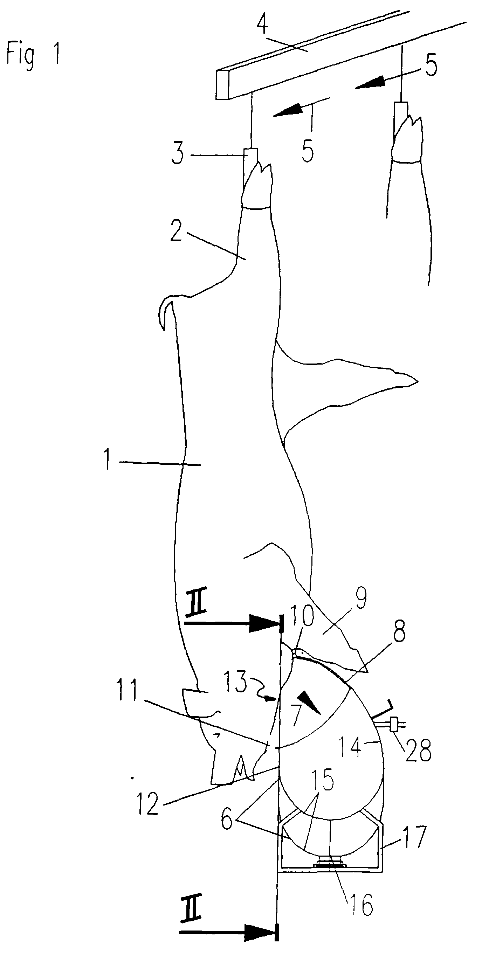

In the drawing, Figure 1 shows a pig 1 which is suspended by one hind leg 2 by way of a hook 3 from a conveyor system 4, by means of which the previously stunned pigs are conveyed in the direction of the arrows 5 to the sticking place. The sticking place, i.e. the place or the platform where the pig is killed by the sticker, is not shown in any further detail here, but is formed largely by the collection vessel 6 which is placed on a fixed support, and in which blood 7 flowing out of the pig 1 after sticking is collected. The collection vessel has guide means in the form of a screen 8 which extends above the vessel 6 and on which the front legs 9 of the pig 1 rest. A free passage opening 13 is situated between the curled front edge 10 of the screen 8 and the top edge 11 of the front wall 12 of the container 6. The guide means in the form of the screen 8 ensure that the blood flow 7 from the pig 1 passes through the passage opening 13 in a well directed manner and virtually uncontaminated largely into the central part of the collection vessel 6. The width of the passage opening 13, measured in a plane at right angles to the edges of the vessel, is 10 to 50 cm, preferably approximately 15 cm. The length of the passage opening 13, measured in the direction of conveyance 5, is 100 to 200 cm and will generally be equal to the length of the blood collection vessel 6.

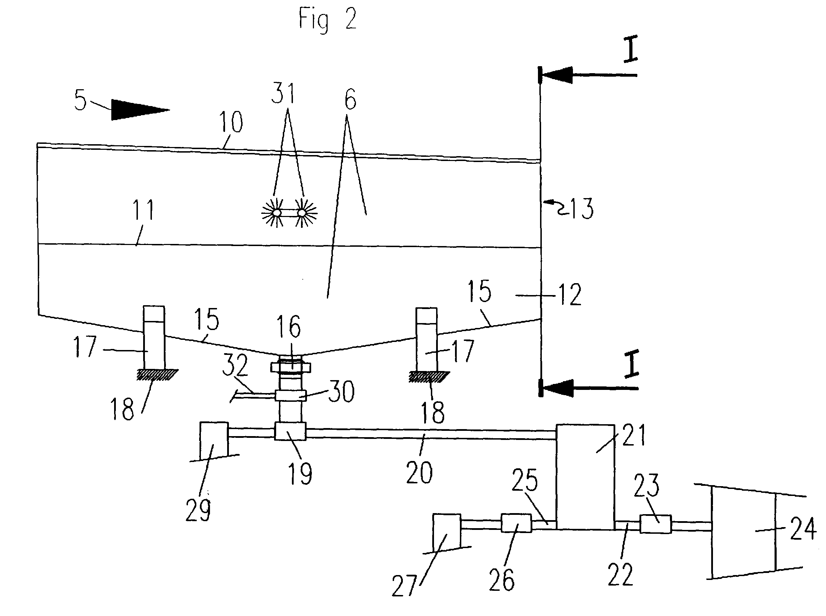

As can be seen in Figure 1, the screen 8 has a backward sloping, curved profile, which merges into the rear wall 14 of the vessel 6. The bottom 15 of the collection vessel 6 slopes gradually towards the outlet opening 16 for the collection of blood, situated in the lowest point of the vessel. As can be seen from Figure 2, the bottom 15 of the vessel 6 slopes in a straight line in the direction of conveyance 5 of the animals towards the outlet opening 16.

As is apparent from Figure 1, the bottom 15 of the vessel 6 runs at right angles to the direction of conveyance 5, sloping in a curved profile towards the outlet opening 16. The collection vessel 6 is provided on either side of the outlet opening 16 with brackets 17, by means of which the vessel 6 is fixed to a support 18 at the sticking place, which is not shown in any further detail. If desired, according to the invention, adjusting cylinders may be fitted between the brackets 17 and the support 18, by means of which cylinders the height of the vessel 6 above the support can be adjusted.

The outlet opening 16 is connected to a main blood pump 19, which can convey the blood by way of the line 20 to an intermediate tank 21 connected thereto. The intermediate tank is connected by way of line 22 and shut-off valve 23 to the main tank 24 for the blood of approved animals. The intermediate tank 21 can also, if desired, be connected by way of line 25 and the shut-off valve 26 to the destruction tank 27 for the blood of any rejected animals. The collection vessel 6 can also be connected by way of the shut-off valve 28 to an inlet for cleaning fluid, which can flush out and disinfect the collection vessel 6 by way of the openings 31 during interruptions of the production process, in which case the cleaning fluid can be taken by way of the blood discharge pump 19 to the waste tank 29. During operation, an anti-clotting agent, such as nitrate or phosphate, is sprayed through the openings 31 into the blood collection vessel by way of the shut-off valve 28.

The blood collection vessel 6 can also be connected to a discharge valve 30 fitted in the outlet upstream of the main blood pump 19, for discharging any visible contamination, if desired, by way of line 32 to a collection tank not shown. In this case the discharge valve 30 can be adjustable in such a way that the collection vessel 6 can be flowed through by the blood of one or more pigs in succession.

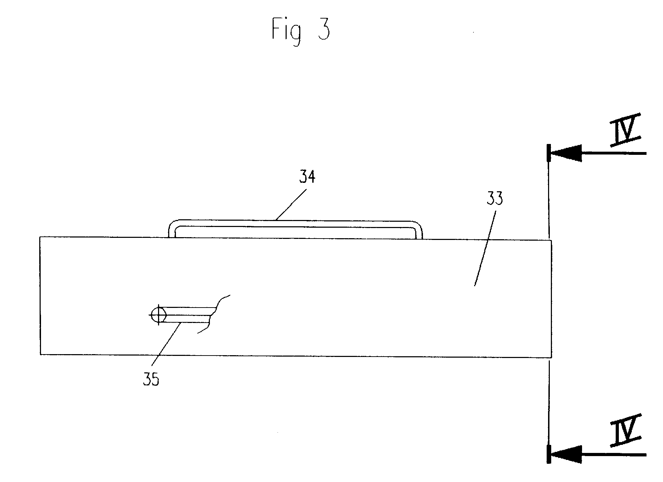

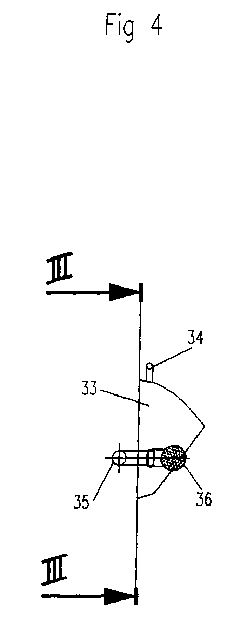

For the purpose of illustration, the cover 33 of the blood collection vessel 6 is shown separately in Figures 3 and 4. The cover 33 is placed on the passage opening 13 of the blood collection vessel 6 only during shorter or longer interruptions of the production process. By way of the line 35 connected to an inlet for fluid (not shown), the vessel 6 can be flushed with a special fluid by means of a fixed or rotating spray ball 36.

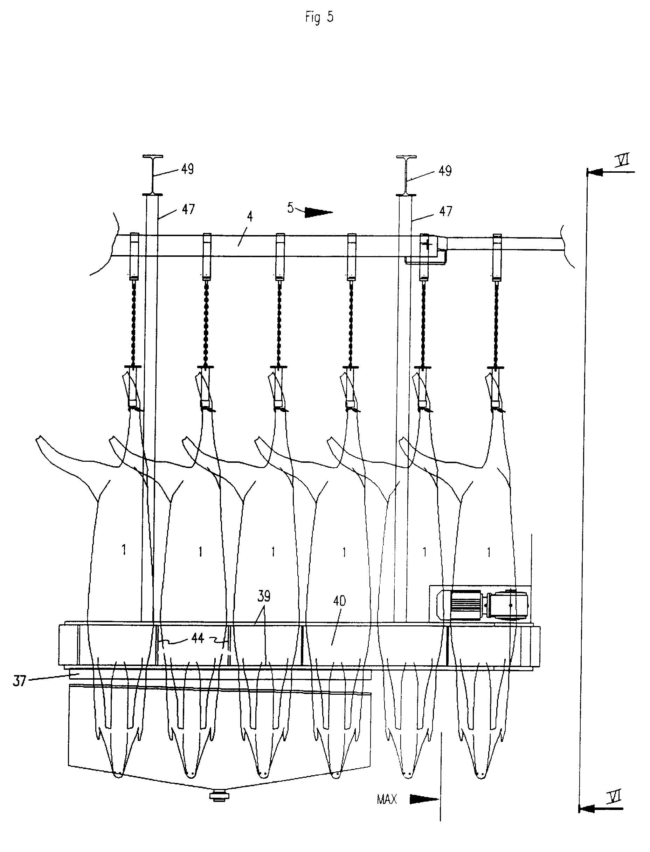

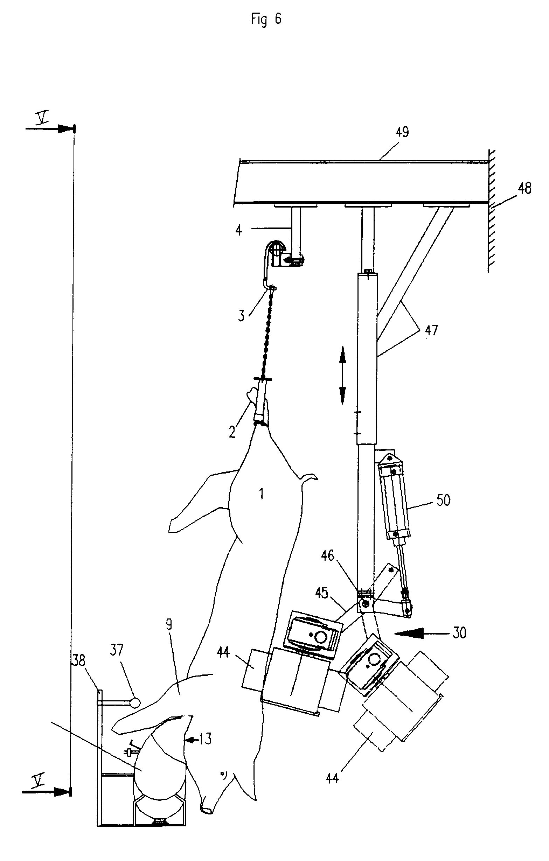

Figures 5 and 6 show the guide rod 37, which is fixed by way of a support 38 to the blood collection vessel 6. The rod 37 extends over the full length of the blood collection vessel and is placed at a distance which is approximately equal to the thickness of the front legs 9 of the pigs 1 above the screen 8 of the collection vessel.

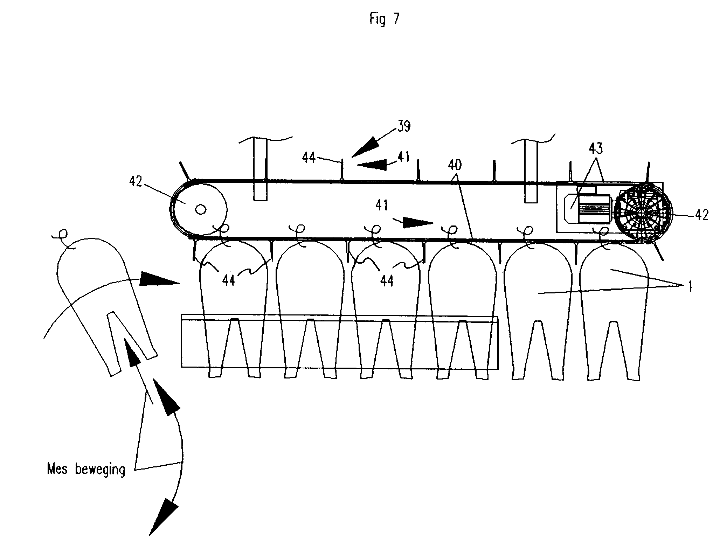

This means that the front legs 9 of the pigs 1 can rest with their front side on the screen 8 and with their rear side against the guide rod 37. The chance of undesirable turning of the pigs is consequently greatly reduced. Figures 5, 6 and 7 also show the abovementioned fixing conveyor 39, which consists of a supporting face 40 in the form of a moving belt which moves in the direction of the arrows 41 during operation. The conveyor or conveyor belt 39 is provided in the usual manner with driving wheels 42, one of which can be driven by a motor 43.

The supporting face 40 of the moving belt is provided with a number of dividing walls 44 which are placed at right angles thereto and are placed at such a distance that a pig 1 can just fit between them. The dividing walls 44 fitted adjacent to each other form a number of resting or supporting points for pigs situated above the blood collection vessel 6. The pigs rest with their back against the supporting face 40, so that, together with the dividing walls 44, this reduces the chance of undesirable turning of the pigs even further.

The fixing conveyor 39 is fixed by the support 45 by way of a hinge 46 and the construction bars 47 on bearing bars 49 anchored in the support 48. By means of the pneumatically or hydraulically operating adjusting cylinder 50, the hingedly suspended fixing conveyor 39 can be placed in the desired position.

It is pointed out that in the description and the claims the term "open system" for the collection of blood should be understood as a system in which, after sticking and withdrawal of the knife shortly thereafter, the blood flows or gushes fairly freely out of the animal and is collected in a vessel. In the case of the "open system" therefore, unlike the "closed system", use is not made of a hollow knife which is directly connected to a pipe, a hose or the like, through which the blood passes directly into a closed tank. Various embodiments are possible within the scope of the invention. In particular, the invention is not limited to the design shown in the drawing.

## Claims

1. Device for collecting blood when slaughtering animals, in particular pigs, according to the open system by means of a blood collection vessel, in which the blood can be collected during sticking of the animal, characterized in that guide means (8, 37, 40, 44) are fitted, in particular for parts of the animal's body, for preventing the blood from becoming contaminated and/or blood from being lost.

2. Device according to Claim 1, characterized in that the blood collection vessel (6) is provided with guide means, in particular for the front legs (9) and/or the snout of the animal (1).

3. Device according to Claim 2, provided with a conveyor system with fixing elements, from which a number of animals can be suspended one after the other by their hind legs and conveyed to a sticking place with blood collection vessel, which has a bottom provided with an outlet and upright side walls, characterized in that the guide means are formed by a screen (8) extending above the blood collection vessel (6), on which screen the front legs (9) of an animal can rest, and with a free passage opening (13) being present between the front edge (10) at the animal side of the screen and the front wall (12) of the blood collection vessel, for allowing through blood (7) flowing out of the animal into the collection vessel.

4. Device according to Claim 3, characterized in that at its top side the screen (8) has a backward sloping, in particular curved profile.

5. Device according to Claim 3, characterized in that the screen (8) has a curled front edge (10).

6. Device according to Claim 3, characterized in that the width of the passage opening (13), measured in a plane at right angles to the edges of the blood collection vessel (6), is 10 to 50 cm, preferably approximately 15 cm.

7. Device according to Claim 3, characterized in that a guide element (37), such as a guide rod, extending approximately at a leg's width above the screen (8) in the lengthwise direction of the blood collection vessel (6), is fitted for supporting the rear side of the front legs (9).

8. Device according to Claim 1, characterized in that at the position of the blood collection vessel (6), guide means in the form of dividing elements, in particular dividing walls (44), are fitted at some distance from each other on either side of an animal to be slaughtered, for preventing the animals from turning.

9. Device according to Claim 8, characterized in that the dividing elements (44) are fitted at right angles to a fixing conveyor belt (39) which is movable along with the animals to be slaughtered, and on which the animals can rest with their back.

10. Device according to Claim 9, characterized in that half the length of the fixing conveyor belt (39) extends over the full length of the blood collection vessel (6), the fixing conveyor belt together with the dividing elements (44) forming a number - for example 2 to 10 - of adjacent supporting points for animals to be slaughtered.

11. Device according to Claim 9, characterized in that the fixing conveyor belt (39) with dividing elements (44) is fitted in such a way that it is adjustable relative to the blood collection vessel (6).

12. Device according to Claim 11, characterized in that the fixing conveyor belt (39) is suspended in a hinged manner and is adjustable by means of one or more adjusting cylinders (50).

13. Device according to Claim 3, characterized in that the bottom (15) of the blood collection vessel (6) slopes towards the outlet opening (16) situated in the lowest point of the vessel, which outlet opening is connected to a main blood pump (19), which can convey the blood to an intermediate tank (21) connected thereto.

14. Device according to Claim 13, characterized in that the intermediate tank (21) can be connected as desired to a main tank (24) for the blood of approved animals or to a destruction tank (27) for the blood of rejected animals.

15. Device according to Claim 3, characterized in that the blood collection vessel (6) is connected to an inlet (31) for cleaning fluid, which can flush out and disinfect the collection vessel during interruptions in the production process, in which case the cleaning fluid can be taken by way of the blood discharge pump (19) to a waste tank (29).

16. Device according to Claim 3, characterized in that the blood collection vessel (6) is connected to a discharge valve (30) fitted in the outlet upstream of the main blood pump (19), for discharging visible contamination if desired.

17. Device according to Claim 16, characterized in that the discharge valve (30) is designed to be automatically adjustable in such a way that the collection vessel (6) can be flowed through by the blood of one or more successive pigs.

18. Device according to Claim 3, characterized in that the inside of the blood collection vessel (6) has a smooth, in particular electrolytic, polished surface.

19. Device according to Claim 3, characterized in that the inside of the blood collection vessel (6) is provided with a smooth cladding layer, in particular on the basis of polytetrafluoroethylene (Teflon).

20. Device according to one of the preceding claims, characterized in that the blood collection vessel (6) is fixed to the support (18) in such a way that it is adjustable in height, for example by means of adjusting cylinders.

21. Method for slaughtering animals, in particular pigs, in which a number of animals suspended from a conveyor system by their hind legs are supplied in succession to a sticking place, and at the sticking place according to the open system the blood is collected in a blood collection vessel, characterized in that such guide means for parts of the animal's body are used that contamination of the collected blood and/or blood being lost is prevented.

22. Method according to Claim 21, characterized in that a blood collection vessel provided with guide means, in particular for the legs and/or the snout of the animal, is used.

23. Method according to Claim 22, characterized in that guide means in the form of a screen extending above the blood collection vessel are used, on which screen the front legs of an animal rest during the sticking operation, and in the case of which the blood flowing out of the animal flows into the collection vessel by way of a free passage opening between the front edge of the screen and the front wall of the collection vessel.

24. Method according to Claim 23, characterized in that a guide element, such as a guide rod, extending approximately at a leg's width above the screen in the lengthwise direction of the collection vessel is used for supporting the rear side of the front legs of the animal.

25. Method according to Claim 23, characterized in that at the position of the blood collection vessel, guide means in the form of dividing walls placed at some distance from each other on either side of an animal to be slaughtered are used, the dividing walls being fitted at right angles to a conveyor belt moving along with the animals to be slaughtered, and on which the animals can rest with their back.
